Europäisches Patentamt

European Patent Office

Office européen des brevets

(19)

(11) Veröffentlichungsnummer : **0 425 428 B1**

(12)                    **EUROPÄISCHE PATENTSCHRIFT**

(45) Veröffentlichungstag der Patentschrift :
15.12.93 Patentblatt 93/50

(51) Int. Cl.$^5$ : **C01B 33/32**

(21) Anmeldenummer : 90710028.3

(22) Anmeldetag : 08.10.90

(54) **Verfahren zur Herstellung von Natriumsilikaten.**

(30) Priorität : 25.10.89 DE 3935464
15.02.90 DE 4004624

(43) Veröffentlichungstag der Anmeldung :
02.05.91 Patentblatt 91/18

(45) Bekanntmachung des Hinweises auf die
Patenterteilung :
15.12.93 Patentblatt 93/50

(84) Benannte Vertragsstaaten :
AT BE CH DE DK ES FR GB GR IT LI LU NL SE

(56) Entgegenhaltungen :
EP-A- 0 170 040
EP-A- 0 293 640
FR-A- 2 157 943
US-A- 1 517 891

(56) Entgegenhaltungen :
CHEMICAL ABSTRACTS, Band 111, Nr. 26, 25.
Dezember 1989, Seite 181, Zusammenfassung
Nr. 236101v, Columbus, Ohio, US; RO-A-95 539
(INSTITUTUL DE CERCETARI METALURGICE
(ICEM)) 30-09-1988

(73) Patentinhaber : HOECHST
AKTIENGESELLSCHAFT
D-65926 Frankfurt (DE)

(72) Erfinder : Schimmel, Günther, Dr.
Ehrenstrasse 16
W-5042 Erftstadt (DE)
Erfinder : Kotzian, Michael, Dr.
Sanddornweg 2
W-5042 Erftstadt (DE)
Erfinder : Panter, Herbert
Brunnenstrasse 35
W-5030 Hürth (DE)
Erfinder : Tapper, Alexander, Dr.
Limitenstrasse 152
W-4050 Mönchengladbach (DE)

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von kristallinen Natriumsilikaten mit Schichtstruktur, einem Molverhältnis von $SiO_2$ zu $Na_2O$ von (1,9 bis 2,1) : 1 und einem Wassergehalt von weniger als 0,3 Gewichts-% aus einer Wasserglaslösung mit mindestens 20 Gewichts-% Feststoff.

Aus der US-PS 3 471 253 ist bekannt, Wasserglaslösung dadurch zu gewinnen, daß man 42 gewichts-%ige Natronlauge und Sand (Siliciumdioxid) im Gewichtsverhältnis von etwa 2 : 1 in einen Rührautoklaven einbringt und darin 3 Stunden bei 210 °C und 16 bar verweilen läßt. Die nach Abkühlen des Autoklaveninhalts auf 85 °C entnommene heiße Natriumsilikat-Lösung enthält nach Abfiltrieren des überschüssigen Sandes und anderer Verunreinigungen 57,5 % Feststoff und weist ein $SiO_2$ zu $Na_2O$-Verhältnis von 1,64 : 1 auf.

Kristalline, wasserfreie Natriumsilikate mit Schichtstruktur und einem Molverhältnis von $SiO_2$ zu $Na_2O$ von (1,9 bis 3,5) : 1 stellt man nach dem Verfahren gemäß der DE-OS 37 18 350 dadurch her, daß man Wasserglaslösungen mit einem Feststoffgehalt von 20 bis 65 Gewichts-% in einer Sprühtrocknungszone unter Bildung eines wasserhaltigen amorphen Natriumsilikats behandelt, wobei das aus der Sprühtrocknungszone abströmende Abgas mindestens 140 °C heiß ist. Das wasserhaltige amorphe Natriumsilikat tempert man in einer Glühzone bei 500 bis 800 °C 1 Bis 60 Minuten lang in Gegenwart von mindestens 10 Gewichts-% eines Rückgutes, welches durch mechanische Zerkleinerung von vorher aus der Glühzone ausgetragenem kristallinem Natriumsilikat erhalten wurde.

Nachteilig ist bei dem zuletzt genannten Verfahren, daß das bei der Sprühtrocknung anfallende Material wegen seiner geringen Schüttdichte von 100 bis 250 g/l ein großes Volumen beansprucht und stark staubt. Weiterhin bedingt der Einsatz von Rückgut während der Temperung einen erheblichen Apparatemehraufwand und erfordert wegen des höheren Materialdurchsatzes ein größer dimensioniertes Drehrohr. Schließlich entsteht durch den Einsatz von Rückgut bei einem Molverhältnis von $SiO_2$ zu $Na_2O$ von 2 : 1 ein hoher Anteil der Hochtemperaturmodifikation des Natriumdisilikates ($\alpha$-$Na_2Si_2O_5$), wobei jedoch nicht die Hochtemperaturmodifikation, sondern die $\delta$-Modifikation wegen ihrer besseren Builder-Eigenschaften erwünscht ist.

Erfindungsgemäß werden die genannten Nachteile bei der Herstellung von kristallinen Natriumsilikaten mit Schichtstruktur aus einer Wasserglaslösung mit mindestens 20 Gewichts-% Feststoff dadurch überwunden, daß man

a) die Wasserglaslösung durch Umsetzung von Quarzsand mit Natronlauge im Molverhältnis $SiO_2$ zu $Na_2O$ von (2,0 bis 2,3) : 1 bei Temperaturen von 180 bis 240 °C und Drucken von 10 bis 30 bar gewinnt;

b) die Wasserglaslösung in einer Sprühtrocknungszone mit Heißluft von 200 bis 300 °C bei einer Verweilzeit von 10 bis 25 s und einer Temperatur des die Sprühtrocknungszone verlassenden Abgases von 90 bis 130 °C unter Bildung eines pulverförmigen amorphen Natriumsilikates mit einem Wassergehalt (ermittelt als Glühverlust bei 700 °C) von 15 bis 23 Gewichts-% und einem Schüttgewicht von mehr als 300 g/l behandelt;

c) das pulverförmige, amorphe, wasserhaltige Natriumsilikat in einen geneigt angeordneten, mit Einrichtungen zur Bewegung von Feststoff ausgerüsteten Drehrohrofen einbringt und darin mit Rauchgas mit Temperaturen von mehr als 500 bis 850 °C 1 bis 60 Minuten im Gegenstrom unter Bildung von kristallinem Natriumsilikat behandelt, wobei der Drehrohrofen derart isoliert ist, daß die Temperatur seiner Außenwand weniger als 60 °C beträgt;

d) das aus dem Drehrohrofen austretende kristalline Natriumsilikat auf Korngrößen von 0,1 bis 12 mm mit Hilfe eines mechanischen Brechers zerkleinert.

Das Verfahren gemäß der Erfindung kann weiterhin wahlweise auch noch dadurch ausgestaltet sein, daß

aa) man das zerkleinerte Natriumsilikat mit Hilfe einer Mühle auf Korngrößen von 2 bis 400 µm mahlt;

bb) eine mit einer Umfangsgeschwindigkeit von 0,5 bis 60 $\frac{m}{s}$ betriebene mechanische Mühle verwendet ist;

cc) eine Luftstrahlmühle verwendet ist;

dd) eine keramisch ausgekleidete Kugelmühle verwendet ist;

ee) eine keramisch ausgekleidete Schwingmühle verwendet ist;

ff) das Abgas aus dem Drehrohrofen in seinem mittleren Bereich und im Bereich seines der Einbringung des pulverförmigen amorphen Natriumsilikates dienenden Endes abgesaugt und mit Hilfe eines Trockenentstaubungsfilters gereinigt wird, wobei das aus dem Trockenentstaubungsfilter entnommene Natriumsilikat dem zur Einbringung in den Drehrohrofen bestimmten, pulverförmigen, amorphen, wasserhaltigen Natriumsilikat quasikontinuierlich zugemischt wird;

gg) man das gemahlene kristalline Natriumsilikat einem Walzenkompaktierer zuführt, durch welchen es bei einem Walzenpreßdruck von 20 bis 40 kN/cm Walzenbreite zu kompakten Teilen verpreßt wird;

hh) man die kompakten Teile nach Vorzerkleinern durch Hindurchpressen durch Siebe zu einem Granulat mit einem Schüttgewicht von 700 bis 1000 g/l verarbeitet.

Kristalline Natriumsilikate eignen sich als verstärkende Füllstoffe in Natur- und Synthesekautschuk. Sie verhalten sich ferner wie Ionenaustauscher und können daher als Sequestrant verwendet werden.

Beim Verfahren gemäß der Erfindung wird durch die niedrige Temperatur und die kurze Verweilzeit bei der Versprühung der Wasserglaslösung ein gut handhabbares Natriumsilikat mit hohem Schüttgewicht erhalten.

Durch den niedrigen Wärmeübergang durch die Wandung des Drehrohrofens infolge seiner guten Isolierung wird beim Verfahren gemäß der Erfindung der Klebeneigung des Natriumsilikates entgegengewirkt.

Beim erfindungsgemäßen Verfahren ist die Verwendung einer langsam laufenden mechanischen Mühle (beispielsweise Scheibenmühle, Schlägermühle, Hammermühle oder Walzenmühle) erforderlich, um Eisenabrieb von den Mahlwerkzeugen zu vermeiden.

Verwendet man beim Verfahren gemäß der Erfindung eine keramisch ausgekleidete Kugelmühle oder eine Schwingmühle oder eine Luftstrahlmühle für Feinstprodukte, d.h. mit Durchmessern von 6 bis 10 $\mu$m, so erfolgt ebenfalls keine Kontamination des Natriumsilikates durch Metallabrieb.

Beim erfindungsgemäßen Verfahren wird durch die gleichzeitige Absaugung von staubhaltigem Abgas im mittleren Bereich des Drehrohres und im Bereich seines aufgabeseitigen Endes die Staubbelastung im Abgas beträchtlich vermindert, weil Staub in erster Linie bei der Aufgabe des Natriumsilikates in den Drehrohrofen freigesetzt und weil die Gasgeschwindigkeit im Aufgabebereich des amorphen, wasserhaltigen Natriumsilikates herabgesetzt wird.

Mit dem Verfahren gemäß der Erfindung wird durch Kompaktieren ein abriebfestes Granulat erhalten, welches in Wasser sehr schnell zerfällt.

Setzt man beim erfindungsgemäßen Verfahren eine Wasserglaslösung mit einem molaren Verhältnis von $SiO_2$ zu $Na_2O$ von (2,0 bis 2,1) : 1 ein, so erhält man bei Behandlung im Drehrohrofen mit Rauchgas mit Temperaturen von 600 bis 800 °C ein gut kristallisiertes, hauptsächlich in der $\delta$-Modifikation vorliegendes Natriumdisilikat mit Schichtstruktur, welches frei von $SiO_2$ ist und bei 20 °C ein Kalkbindevermögen von mindestens 80 mg Ca/g aufweist.

Beispiel 1 (nach dem Stand der Technik)

Aus einer Wasserglaslösung mit 45 % Feststoffgehalt wurde in einem Heißluftsprühturm (Abgastemperatur: 145 °C) amorphes Natriumdisilikat erzeugt, welches einen Wassergehalt (ermittelt als Glühverlust bei 700 °C) von 19 % und ein Schüttgewicht von 220 g/l aufwies.

Über eine Dosierschnecke wurden 60 kg/h amorphes Natriumdisilikat und 15 kg/h eines Rückgutes, welches durch Zerkleinern eines in einem früheren Ansatz erhaltenen Produktes auf weniger als 250 $\mu$m gewonnen worden war, in einen direkt befeuerten Drehrohrofen (Länge: 5 m; Durchmesser: 78 cm; Neigung: 1,2 °) an seinem der Flamme gegenüberliegenden Ende aufgegeben, während das kristalline Produkt an der Flammseite ausgetragen wurde. Die Temperatur an der heißesten Stelle des Drehrohrofens betrug 740 °C.

An der Wand des Drehrohrofens bildeten sich keine Verklebungen; das ausgetragene kristalline Natriumdisilikat war weitgehend pulverförmig und wies ein Kalkbindevermögen von 74 mg Ca/g auf.

Beispiel 2 (gemäß der Erfindung)

In einen mit Nickel ausgekleideten, zylindrischen Autoklaven mit Rühreinrichtung wurden Sand (99 Gewichts-% $SiO_2$; Körnung: 90 % < 0,5 mm) und 50 gewichts-%ige Natronlauge im molaren Verhältnis von $SiO_2$ zu $Na_2O$ von 2,15 : 1 eingefüllt. Die Mischung wurde bei gerührtem Autoklaven durch Aufpressen von Wasserdampf (16 bar) auf 200 °C erhitzt und 60 Minuten bei dieser Temperatur gehalten. Dann wurde der Inhalt des Autoklaven über ein Ausdampfgefäß in einen Behälter entspannt und nach Zusatz von 0,3 Gewichts-% Perlit als Filterhilfsmittel bei 90 °C zur Abscheidung des Unlöslichen über ein Scheibendruckfilter filtriert. Als Filtrat wurde eine klare Wasserglaslösung mit einem molaren Verhältnis von $SiO_2$ zu $Na_2O$ von 2,04 : 1 erhalten. Durch Verdünnen mit Wasser wurde ein Feststoffgehalt von 50 % eingestellt.

In einen mit einem Scheibenzerstäuber ausgerüsteten Heißluftsprühturm, welcher über eine gasbefeuerte Brennkammer beheizt wurde und mit einem pneumatisch abreinigenden Schlauchfilter zur Produktabscheidung verbunden war, wurde die Wasserglaslösung versprüht, wobei die Brennkammer so eingestellt war, daß das am Turmkopf eintretende heiße Gas eine Temperatur von 260 °C aufwies. Die Menge der zu versprühenden Wasserglaslösung wurde so eingestellt, daß die Temperatur des den Sprühturm verlassenden Silikat-Gas-Gemisches 105 °C betrug. Aus dem Volumen des Sprühturmes und aus dem Gasdurchsatz durch den Sprühturm wurde die Verweilzeit zu 16 Sekunden berechnet. Das am Schlauchfilter abgeschiedene amorphe Natriumdisilikat wies bei geringer Staubneigung ein Schüttgewicht von 480 g/l, einen Eisengehalt von 0,01 Ge-

wichts-%, ein $SiO_2$ : $Na_2O$-Verhältnis von 2,04 : 1 und einen Glühverlust bei 700 °C von 19,4 % auf; sein mittlerer Teilchendurchmesser betrug 52 µm.

Der in Beispiel 1 beschriebene Drehrohrofen war mit mehrlagiger Mineralwolle und einem Blechmantel derart isoliert worden, daß bei einer Temperatur im Inneren des Drehrohrofens von 730 °C an seiner Außenhaut eine Temperatur von maximal 54 °C auftrat. In diesen Drehrohrofen wurden stündlich 60 kg des amorphen Natriumdisilikates eingetragen, wobei sich keine Verklebungen ausbildeten. Das den Drehrohrofen verlassende kristalline Natriumdisilikat ($Na_2Si_2O_5$ mit Schichtstruktur), welches einen Wassergehalt (ermittelt als Glühverlust bei 700 °C) von 0,1 Gewichts-% aufwies, wurde mit Hilfe eines mechanischen Brechers auf eine Körnung von weniger als 6 mm zerkleinert und nach einer Zwischenkühlung auf einer Scheibenmühle (Durchmesser: 30 cm) bei 400 min⁻¹ auf einen mittleren Teilchendurchmesser von 110 µm gemahlen, wobei der Eisengehalt des gemahlenen Produktes mit dem des amorphen Natriumdisilikates identisch blieb.

Das Abgas des Drehrohrofens wurde nur im Eintragsbereich für das amorphe Natriumdisilikat abgesaugt und einem Waschturm zugeführt. Mit dem Abgas wurden stündlich 5 kg Natriumdisilikat ausgetragen.

Beispiel 3 (gemäß der Erfindung)

Das gemäß Beispiel 2 erhaltene Produkt mit einem mittleren Teilchendurchmesser von 110 µm wurde mit Hilfe einer Fließbett-Gegenstrahlmühle mit eingebauter mechanischer Sichtvorrichtung weiter zerkleinert. In Abhängigkeit von der eingestellten Sichterdrehzahl erhielt man ein abriebfreies Natriumdisilikat mit einem mittleren Teilchendurchmesser von 2 bis 15 µm und einem Wassergehalt von 0,18 Gewichts-%, wobei die Schichtstruktur unverändert erhalten blieb.

Beispiel 4 (gemäß der Erfindung)

Das gemäß Beispiel 2 erhaltene Produkt wurde mit Hilfe einer mit Porzellan ausgekleideten und mit Korundkugeln gefüllten Kugelmühle weiter zerkleinert. Es wurde ein abriebfreies Natriumdisilikat mit einem von der Mahldauer abhängigen mittleren Teilchendurchmesser von 5 bis 14 µm erhalten, wobei die Schichtstruktur unverändert erhalten blieb.

Beispiel 5 (gemäß der Erfindung)

Das gemäß Beispiel 2 erhaltene Produkt wurde in einem Walzenkompaktierer mit einem Preßdruck der Kompaktierwalzen von 30 kN/cm Walzenbreite mit anschließender Zerkleinerung der Schulpe in einem Siebgranulator zu einem staubfreien Granulat mit einem mittleren Teilchendurchmesser von 750 µm, einem Schüttgewicht von 820 g/l und hoher Abriebfestigkeit verarbeitet.

Zur Bestimmung der Abriebfestigkeit werden 50 g Granulat in einer Rollkugelmühle (Länge: 10 cm; Durchmesser: 11,5 cm; 8 Stahlkugeln mit 2 cm Durchmesser) 5 Minuten bei einer Drehzahl von 100 min⁻¹ behandelt.

Nach Durchführung des Abriebtestes betrug der mittlere Teilchendurchmesser noch 585 µm, was einer Abnahme um 22 % entspricht.

Beispiel 6 (gemäß der Erfindung)

Beispiel 2 wurde mit der Änderung wiederholt, daß das Abgas des Drehrohrofens an zwei Stellen abgesaugt wurde; und zwar neben im Eintragsbreich für das amorphe Natriumdisilikat zusätzlich an einer Stelle des Drehrohrofens, welche ca. 2 m von dem genannten Eintragsbereich in Richtung der Drehrohrachse entfernt war. Beide Abgasströme wurden vereinigt und der in ihnen enthaltene Feststoff wurde mit Hilfe eines hitzebeständigen Schlauchfilters abgeschieden. Der abgeschiedene Feststoff wurde zusammen mit dem amorphen Natriumdisilikat wieder in den Drehrohrofen eingetragen, so daß kein Natriumdisilikat verlorenging. Dadurch erhöhte sich der Durchsatz des Drehrohrofens auf 70 kg/h, dennoch traten keine Verklebungen im Inneren des Drehrohrofens auf.

Beispiel 7 (Vergleichsbeispiel)

Beispiel 2 wurde mit der Änderung wiederholt, daß das am Kopf des Heißluftsprühturmes eintretende heiße Gas eine Temperatur von 330 °C aufwies. Die Temperatur des den Sprühturm verlassenden Silikat-Gas-Gemisches betrug 140 °C. Das am Schlauchfilter abgeschiedene amorphe Natriumdisilikat wies ein Schüttgewicht von 250 g/l, einen Glühverlust bei 700 °C von 17,9 Gewichts-% und einen mittleren Teilchendurch-

messer von 60 μm auf. Dieses Natriumdisilikat staubte stark.

Beispiel 8 (Vergleichsbeispiel)

Beispiel 2 wurde mit der Änderung wiederholt, daß eine Wasserglaslösung mit einem molaren $SiO_2$ : $Na_2O$-Verhältnis von 2,15 : 1 hergestellt und im Heißluftsprühturm zu einem amorphen Natriumdisilikat mit einem $SiO_2$ : $Na_2O$-Verhältnis von 2,15 : 1 versprüht wurde. Im Drehrohrofen wurde daraus bei 730 °C ein kristallines Natriumdisilikat erhalten, welches im Röntgendiagramm die Linien des unerwünschten Nebenproduktes Cristobalit ($SiO_2$) zeigte, das für eine Verringerung des Kalkbindevermögens verantwortlich ist und die Buildereigenschaften verschlechtert.

Beispiel 9 (Vergleichsbeispiel)

Beispiel 2 wurde mit der Abänderung wiederholt, daß der Drehrohrofen nur derart isoliert war, daß bei einer Temperatur im Inneren des Drehrohrofens von 710 °C an seiner Außenhaut eine Temperatur von maximal 205 °C auftrat. Dadurch bildeten sich an der Innenwandung des Drehrohrofens großflächige Verklebungen aus, die häufig mechanisch abgestoßen werden mußten. Aus dem Drehrohrofen wurde sehr hartes, schlecht durchkristallisiertes Produkt ausgetragen, das teilweise Fußballgröße aufwies und vom mechanischen Brecher nur schwierig zu zerkleinern war.

Beispiel 10 (Vergleichsbeispiel)

Beispiel 2 wurde mit der Änderung wiederholt, daß das mit Hilfe des mechanischen Brechers zerkleinerte Natriumdisilikat unter Verwendung einer Pralltellermühle bei 10000 min$^{-1}$ auf einen mittleren Teilchendurchmeser von 98 μm gemahlen wurde. Das gemahlene Produkt hatte einen Graustich und wies einen Eisengehalt von 0,025 Gewichts-% auf.

Beispiel 11 (Vergleichsbeispiel)

Beispiel 5 wurde mit der Abänderung wiederholt, daß der Preßdruck der Kompaktierwalzen nur 15 kN/cm Walzenbreite betrug. Das resultierende Granulat wies einen mittleren Teilchendurchmesser von 680 μm und ein Schüttgewicht von 790 g/l auf. Nach Durchführung des Abriebtestes betrug der mittlere Teilchendurchmesser nur noch 265 μm, was einer Abnahme von 61 % entspricht. Das Granulat war weich und zerfiel teilweise schon beim Verpacken ii kleinere Agglomerate.

Das in der folgenden Tabelle angegebene Kalkbindevermögen der in den Beispielen erhaltenen Natriumsilikate mit Schichtstruktur wurde nach folgender Vorschrift ermittelt:

1 l destilliertes Wasser wurde mit $CaCl_2$-Lösung (entsprechend 300 mg CaO) versetzt, wodurch ein Wasser mit 30 °d erhalten wurde.

Zu 1 l dieses Wassers, welches entweder auf 20 oder 60°C temperiert war, wurden 1 g des in den Beispielen erhaltenen kristallinen Natriumsilikates sowie 0 bis 6 ml einer 1-molaren Glykokoll-Lösung (erhalten aus 75,1 g Glykokoll und 58,4 g NaCl, welche mit Wasser zu 1 l gelöst wurden) gegeben, wonach sich ein pH-Wert von 10,4 einstellte. Die Suspension wurde 30 Minuten bei der gewählten Temperatur (20 bzw. 60 °C) gerührt, währenddessen der pH-Wert stabil blieb. Schließlich wurde abfiltriert und im Filtrat das in Lösung verbliebene Calcium komplexometrisch bestimmt. Durch Differenzbildung mit dem ursprünglichen Gehalt wurde das Kalkbindevermögen ermittelt.

T A B E L L E

Kalkbindevermögen von Natriumsilikaten bei pH 10,4
(in mg Ca/g $Na_2Si_2O_5$)

| Beispiel | bei 20 °C | bei 60 °C |
|---|---|---|
| 1 | 74 | 123 |
| 2, 3, 4, 5, 10, 11 | 82 | 132 |
| 6 | 84 | 136 |
| 8 | 75 | 125 |
| 9 | 77 | 126 |

**Patentansprüche**

1. Verfahren zur Herstellung von kristallinen Natriumsilikaten mit Schichtstruktur, einem Molverhältnis von $SiO_2$ zu $Na_2O$ von (1,9 bis 2,1) : 1 und einem Wassergehalt von weniger als 0,3 Gewichts-% aus einer Wasserglaslösung mit mindestens 20 Gewichts-% Feststoff, dadurch gekennzeichnet, daß man

   a) die Wasserglaslösung durch Umsetzung von Quarzsand mit Natronlauge im Molverhältnis $SiO_2$ zu $Na_2O$ von (2,0 bis 2,3) : 1 bei Temperaturen von 180 bis 240 °C und Drucken von 10 bis 30 bar gewinnt;

   b) die Wasserglaslösung in einer Sprühtrocknungszone mit Heißluft von 200 bis 300 °C bei einer Verweilzeit von 10 bis 25 s und einer Temperatur des die Sprühtrocknungszone verlassenden Abgases von 90 bis 130 °C unter Bildung eines pulverförmigen amorphen Natriumsilikates mit einem Wassergehalt (ermittelt als Glühverlust bei 700 °C) von 15 bis 23 Gewichts-% und einem Schüttgewicht von mehr als 300 g/l behandelt;

   c) das pulverförmige, amorphe, wasserhaltige Natriumsilikat in einen geneigt angeordneten, mit Einrichtungen zur Bewegung von Feststoff ausgerüsteten Drehrohrofen einbringt und darin mit Rauchgas mit Temperaturen von mehr als 500 bis 850 °C 1 bis 60 Minuten im Gegenstrom unter Bildung von kristallinem Natriumsilikat behandelt, wobei der Drehrohrofen derart isoliert ist, daß die Temperatur seiner Außenwand weniger als 60 °C beträgt;

   d) das aus dem Drehrohrofen austretende kristalline Natriumsilikat auf Korngrößen von 0,1 bis 12 mm mit Hilfe eines mechanischen Brechers zerkleinert.

2. Verfahren nach Anspruch 1, <u>dadurch gekennzeichnet</u>, daß man das zerkleinerte Natriumsilikat mit Hilfe einer Mühle auf Korngrößen von 2 bis 400 µm mahlt.

3. Verfahren nach Anspruch 2, <u>dadurch gekennzeichnet</u>, daß eine mit einer Umfangsgeschwindigkeit von 0,5 bis 60 $\frac{m}{s}$ betriebene mechanische Mühle verwendet ist.

4. Verfahren nach Anspruch 2, <u>dadurch gekennzeichnet</u>, daß eine Luftstrahlmühle verwendet ist.

5. Verfahren nach Anspruch 2, <u>dadurch gekennzeichnet</u>, daß eine keramisch ausgekleidete Kugelmühle verwendet ist.

6. Verfahren nach Anspruch 2, <u>dadurch gekennzeichnet</u>, daß eine keramisch ausgekleidete Schwingmühle verwendet ist.

7. Verfahren nach mindestens einem dar Ansprüche 1 bis 6, <u>dadurch gekennzeichnet</u>, daß das Abgas aus dem Drehrohrofen in seinem mittleren Bereich und im Bereich seines der Einbringung des pulverförmigen amorphen Natriumsilikates dienenden Endes abgesaugt und mit Hilfe eines Trockenentstaubungsfilters gereinigt wird, wobei das aus dem Trockenentstaubungsfilter entnommene Natriumsilikat dem zur Einbringung in den Drehrohrofen bestimmten pulverförmigen, amorphen, wasserhaltigen Natriumsilikat quasikontinuierlich zugemischt wird.

8. Verfahren nach mindestens einem der Ansprüche 1 bis 7, <u>dadurch gekennzeichnet</u>, daß man das gemahlene wasserfreie Natriumsilikat einem Walzenkompaktierer zuführt, durch welchen es bei einem Walzenpreßdruck von 20 bis 40 kN/cm Walzenbreite zu kompakten Teilen verpreßt wird.

9. Verfahren nach Anspruch 8, <u>dadurch gekennzeichnet</u>, daß man die kompakten Teile nach Vorzerkleinern durch Hindurchpressen durch Siebe zu einem Granulat mit einem Schüttgewicht von 700 bis 1000 g/l verarbeitet.

## Claims

1. A process for producing crystalline sodium silicates having a layer structure, an $SiO_2/Na_2O$ molar ratio of (1.9 to 2.1) : 1 and a water content of less than 0.3% by weight from a waterglass solution containing at least 20% by weight of solids, which comprises

   a) obtaining the waterglass solution by reacting quartz sand with sodium hydroxide solution in an $SiO_2/Na_2O$ molar ratio of (2.0 to 2.3) : 1 at temperatures from 180 to 240°C and pressures from 10 to 30 bar,

   b) treating the waterglass solution in a spray-drying zone with hot air at 200 to 300°C for a residence time of 10 to 25 seconds and at a temperature of the exit gas leaving the spray-drying zone of 90 to 130°C, to form a pulverulent amorphous sodium silicate having a water content (determined as the loss on ignition at 700°C) of 15 to 23% by weight and a bulk density of more than 300 g/l,

   c) introducing the pulverulent, amorphous, water-containing sodium silicate into an obliquely arranged rotary kiln fitted with devices for moving solids and treating it therein with flue gas in counter-current at temperatures from more than 500 to 850°C for 1 to 60 minutes to form crystalline sodium silicate, the rotary kiln being insulated in such a way that its outside wall temperature is less than 60°C, and

   d) comminuting the crystalline sodium silicate emerging from the rotary kiln by means of a mechanical crusher to grain sizes of 0.1 to 12 mm.

2. The process as claimed in claim 1, wherein the comminuted sodium silicate is ground by means of a mill to grain sizes of 2 to 400 µm.

3. The process as claimed in claim 2, wherein a mechanical mill running at a circumferential speed of 0.5 to 60 m/s is used.

4. The process as claimed in claim 2, wherein an air jet mill is used.

5. The process as claimed in claim 2, wherein a ceramically lined ball mill is used.

**EP 0 425 428 B1**

6. The process as claimed in claim 2, wherein a ceramically lined vibratory mill is used.

7. The process as claimed in at least one of claims 1 to 6, wherein the exit gas from the rotary kiln is extracted in the central region thereof and in the region of the end where the pulverulent amorphous sodium silicate is introduced, and purified by means of a dry dust filter, the sodium silicate taken from the dry dust filter being quasi-continuously admixed to the pulverulent, amorphous, water-containing sodium silicate destined to be introduced into the rotary kiln.

8. The process as claimed in at least one of claims 1 to 7, wherein the ground anhydrous sodium silicate is fed to a roll compactor, by means of which it is compressed at a roll-pressing force of 20 to 40 kN/cm of roll width to give compact pieces.

9. The process as claimed in claim 8, wherein the compact pieces are, after pre-comminution by forcing them through screens, processed to give granules having a bulk density of 700 to 1,000 g/l.

**Revendications**

1. Procédé pour la fabrication de silicates de sodium cristallins à structure lamellaire ayant un rapport molaire $SiO_2/Na_2O$ de (1,9 à 2,1): 1 et une teneur en eau de moins de 0,3 % en poids à partir d'une solution de verre soluble à au moins 20 % en poids de solides, caractérisé en ce que
   a) on obtient la solution de verre soluble par réaction de sable quartzeux avec la lessive de soude dans le rapport molaire $SiO_2/Na_2O$ de (2,0 à 2,3): 1 à des températures de 180 à 240°C et sous des pressions de 10 à 30 bars;
   b) on traite la solution de verre soluble dans une zone de séchage par pulvérisation par l'air chaud à 200-300°C avec une durée de passage de 10 à 25 s et à une température du gaz résiduaire quittant la zone de séchage par pulvérisation de 90 à 130°C, avec formation d'un silicate de sodium amorphe pulvérulent ayant une teneur en eau (déterminée comme perte au feu à 700°C) de 15 à 23 % en poids et une densité apparente de plus de 300 g/l;
   c) on introduit le silicate de sodium hydraté amorphe pulvérulent dans un four tubulaire tournant incliné muni de dispositifs pour la circulation de la matière solide et on le traite dans celui-ci par un gaz de fumée à contre-courant, à des températures de plus de 500 à 850°C pendant 1 à 60 min avec formation de silicate de sodium cristallin, le four tubulaire tournant étant isolé de telle manière que la température de sa paroi extérieure soit de moins de 60°C;
   d) on broie le silicate de sodium cristallin sortant du four tubulaire tournant à des grosseurs de grains de 0,1 à 12 mm au moyen d'un broyeur mécanique.

2. Procédé selon la revendication 1, caractérisé en ce que l'on broie le silicate de sodium concassé au moyen d'un broyeur à des grosseurs de grains de 2 à 400 μm.

3. Procédé selon la revendication 2, caractérisé en ce que l'on utilise un broyeur mécanique fonctionnant à une vitesse périphérique de 0,5 à 60 m/s.

4. Procédé selon la revendication 2, caractérisé en ce que l'on on utilise un broyeur à jet d'air.

5. Procédé selon la revendication 2, caractérisé en ce que l'on utilise un broyeur à boulets doublé de céramique.

6. Procédé selon la revendication 2, caractérisé en ce que l'on utilise un désintégrateur à mouvements oscillatoires doublé de céramique.

7. Procédé selon l'une au moins des revendications 1 à 6, caractérisé en ce que le gaz résiduaire est extrait du four tubulaire tournant dans sa zone moyenne et dans la zone de son extrémité servant à l'introduction du silicate de sodium amorphe pulvérulent et il est purifié au moyen d'un filtre dépoussiéreur à sec, le silicate de sodium retiré du filtre dépoussiéreur à sec étant mélangé en quasi continu avec le silicate de sodium hydraté amorphe pulvérulent destiné à l'introduction dans le four tubulaire tournant.

8. Procédé selon l'une au moins des revendications 1 à 7, caractérisé en ce que l'on envoie le silicate de sodium cristallin broyé à un compacteur à cylindres à travers lequel il est comprimé en morceaux compacts

8

sous une pression des cylindres de 20 à 40 kN/cm de largeur des cylindres.

9. Procédé selon la revendication 8, caractérisé en ce que l'on traite les morceaux compacts après prébroyage par passage sous pression à travers des tamis en un granulat d'une densité apparente de 700 à 1000 g/l.